# DEMANDE DE BREVET EUROPEEN

(11) **EP 0 644 340 A2**
(43) Date de publication de la demande: **22.03.1995**
(21) Numéro de dépôt: 94810509.3
(22) Date de dépôt: 05.09.1994
(51) Int. Cl.: F16B 45/02, B63B 21/54

(54) **Dispositif d'accrochage à mousqueton, notamment pour l'amarrage de bateaux**

(30) Priorité: 14.09.1993 CH 2742/93
(71) Demandeur: Ringrose, Anthony Stephen, CH-1224 Chêne-Bougeries (CH)
(72) Inventeur: Ringrose, Anthony Stephen, CH-1224 Chêne-Bougeries (CH)

(57) **Abrégé**

Ce dispositif d'accrochage à mousqueton comporte un crochet (12) fermé de l'intérieur par un clapet (13) pressé par un ressort (14) contre l'extrémité intérieure du crochet (12). Le crochet (12) est articulé par un axe (8) entre deux flasques de support (6,7) et est solidaire d'un levier (12a) appliqué contre une butée (10) solidaire des flasques (6,7) par un verrou (15) monté longitudinalement coulissant à l'encontre d'un ressort de rappel (29) et commandé à distance par un lien souple (20).

## Description

La présente invention se rapporte à un dispositif d'accrochage, notamment pour l'amarrage de bateaux, comprenant une boucle, fermée par un clapet maintenu en position de fermeture par un ressort.

Le problème de l'accrochage à distance du point d'accrochage se pose dans la varape, la spéléologie et surtout dans l'amarrage des bateaux, bien que cette liste ne soit nullement exhaustive.

Si on a pensé depuis longtemps au problème de l'accrochage automatique à l'aide d'un mousqueton dont le clapet est maintenu en position de fermeture par un ressort qui s'applique de l'intérieur de la boucle contre l'extrémité du crochet du mousqueton, de sorte qu'en lançant latéralement le crochet du mousqueton contre l'anneau d'une bouée par exemple, le clapet rentre à l'intérieur de la boucle et ensuite se referme grâce au ressort qui ramène le clapet en position de fermeture, le problème de l'ouverture du mousqueton pour décrocher l'anneau n'est encore que partiellement résolu.

On a déjà proposé dans le US-653021 un crochet à mousqueton dont l'ouverture du clapet peut être commandé à distance. Toutefois, il ne faut pas oublier que lors du décrochage de la boucle d'amarrage, suivant l'état de la mer, la force et la direction du vent, c'est une force de plusieurs centaines de N qui s'exerce sur le crochet, de sorte que même si celui-ci est ouvert à distance par l'ouverture du clapet, il reste à dégager le crochet de la boucle d'amarrage. Or, avec la traction exercée par le bateau sur le crochet par l'intermédiaire de la corde de liaison, le bateau n'est pas libéré même avec le crochet ouvert étant donné la traction exercée sur lui.

On a proposé dans WO-A1-92/02406 un crochet formé par un anneau présentant une partie latérale articulée. L'anneau est articulé en deux points disposés sensiblement à 90° l'un de l'autre. L'un des points est relié à une tige s'étendant dans le prolongement du diamètre de l'anneau. Pour ouvrir la boucle, on tire sur un élément souple fixé à l'autre point, de sorte que l'anneau bascule angulairement autour du premier point d'articulation en même temps que le second point d'articulation dégage un verrou qui libère la partie mobile de l'anneau.

L'inconvénient de cette solution provient du fait que pour dégager l'anneau il faut tout d'abord le faire pivoter. Or ceci peut être extrèmement difficile lorsque la force de traction exercée par le bateau sur la boucle est élevée. En outre, avec ce dispositif, l'accrochage de la boucle n'est pas automatique comme elle l'est avec un mousqueton.

Comme on le voit, la manoeuvre d'amarrage et surtout celle qui permet de quitter l'amarrage n'ont pas encore trouvé de solution qui permet d'effectuer ces deux opérations entièrement à distance quelle que soit la force exercée sur les amarres.

C'est précisément le but de la présente invention d'apporter une solution qui remédie aux inconvénients sus-mentionnés.

A cet effet, la présente invention a pour objet un dispositif d'accrochage à mousqueton notamment pour l'amarrage de bateaux selon la revendication 1.

Les dessins annexés illustrent, schématiquement et à titre d'exemple, une forme d'éxécution et une variante du dispositif d'accrochage objet de la présente invention.

La figure 1 est une vue en perspective de cette forme d'exécution.

La figure 2 est une vue en coupe longitudinale selon II-II de la figure 1.

La figure 3 est une vue selon III-III de la figure 4.

La figure 4 est une vue semblable à la figure 2 dans une autre position du dispositif.

La figure 5 est une variante de la forme d'exécution illustrée dans la figure 2.

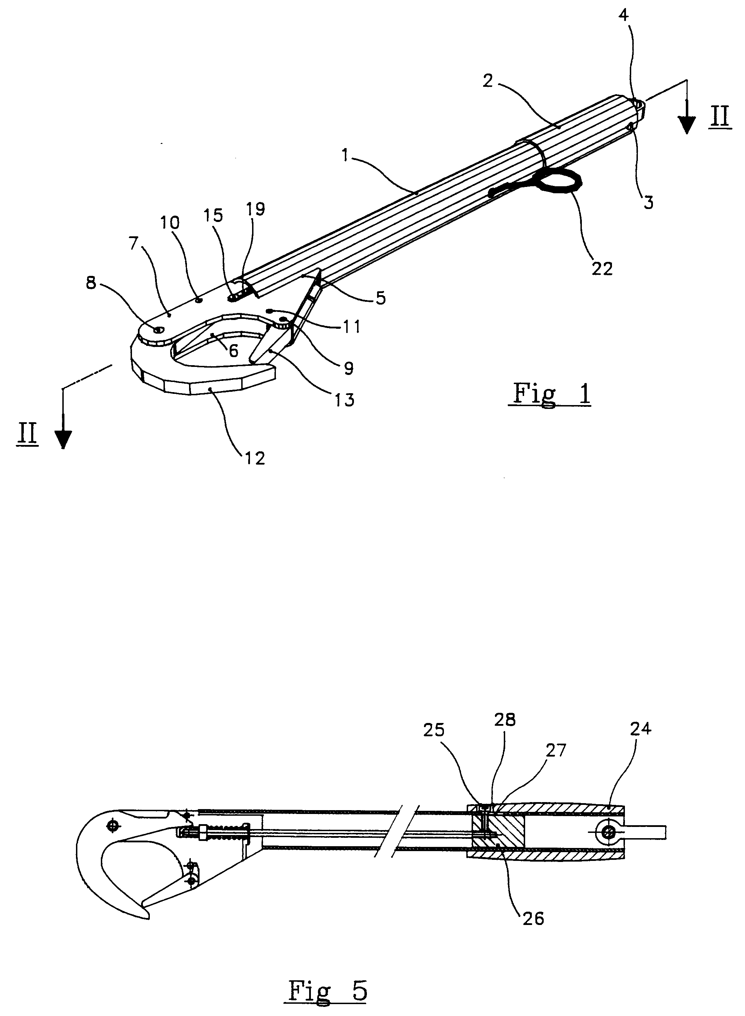

Le dispositif d'accrochage illustré par les figures 1 à 4 comporte un corps tubulaire 1 dont l'extrémité arrière porte une barrette rivée 3 qui porte une boucle 4 pour l'accrochage d'une corde (non représentée). L'extrémité avant du corps tubulaire 1 présente un fraisage 5 dans lequel sont fixés par soudage deux flasques parallèles 6 et 7 entre lesquels sont disposés deux axes 8 et 9 et deux butées 10 et 11.

L'axe 8 sert d'articulation à un crochet 12 alors que l'axe 9 sert d'articulation à un clapet 13. Ce clapet 13 est muni d'un ergot 13a maintenu appliqué contre la butée par un ressort de rappel 14. Quant au crochet 12, il est solidaire d'un levier 12a qui est appliqué contre la butée 10 par un verrou 15.

Ce verrou est constituée par une tige 16 montée coulissante à travers une flasque de guidage perforée 18 s'étendant perpendiculairement aux flasques 6 et 7. Le verrou proprement dit est perpendiculaire à la tige 16 et est guidé dans des ouvertures allongées 19 ménagées dans les flasques 6 et 7. Un ressort de rappel 29 du verrou 15 est armé entre la flasque de guidage perforée 18 et un élément de guidage 17 solidaire de la tige 16. L'extrémité arrière de cette tige 16 est reliée à un lien souple 20 qui traverse une ouverture 21 du corps tubulaire et se termine par un organe de préhension 22 en forme d'anneau. L'ouverture 21 a la forme d'une trou de serrure, alors que le lien souple porte à proximité de l'anneau 22 une bague 23. Cette bague 23 peut passer à travers la partie large du trou de serrure 21 mais pas à travers la partie étroite empéchant l'actionnement accidentel ou involontaire du verrou 15.

Le fonctionnnement du dispositif d'accrochage décrit est le suivant:

Lors de l'amarrage, l'utilisateur projette le mousqueton fermé par le crochet 12 et le clapet 13 de manière à ce que la boucle de la bouée, ou d'autres points d'amarrage, rencontre le clapet 13 qui s'ouvre automatiquement à l'encontre de son ressort de rappel 14 qui applique son extrémité contre l'extrémité intérieure du crochet 12, ce qui permet à la boucle d'amarrage de rentrer à l'intérieur du crochet 12, dont le clapet 13 se referme automatiquement sous l'action du ressort de rappel 14.

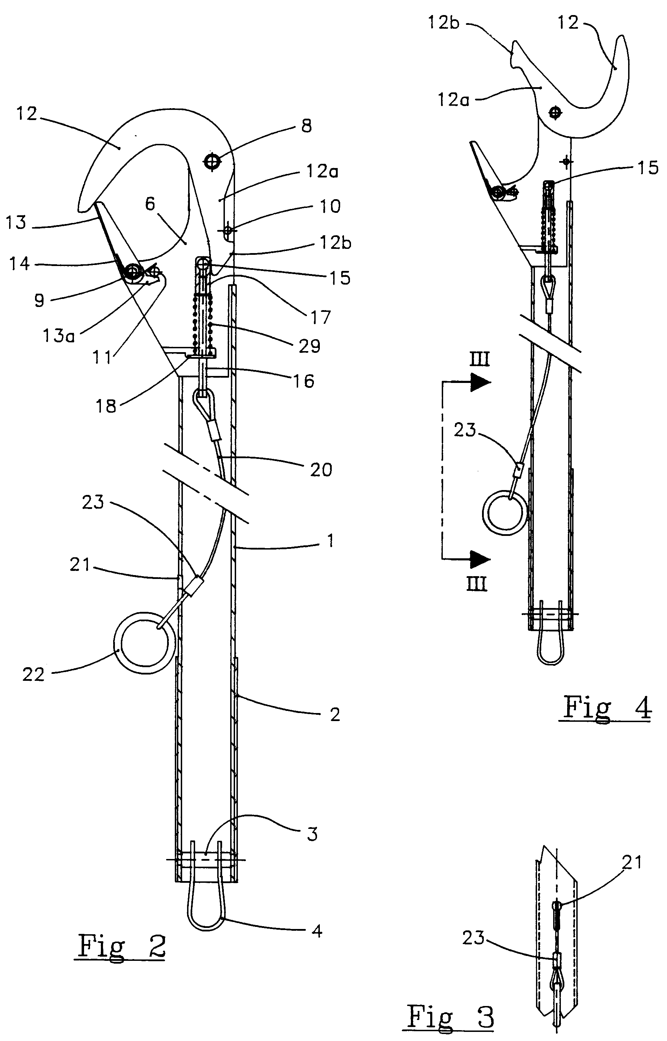

Lorsque l'on désire libérer le dispositif d'accrochage de la boucle à laquelle on l'a accroché, il faut dégager la bague 23 en la faisant passer par la partie circulaire de l'ouverture 21 puis tirer l'organe de préhension 22, de manière à dégager le verrou 15 afin de libérer le levier 12a du crochet 12 pour lui permettre de pivoter autour de l'axe 8 comme illustré par la figure 4. Comme on peut l'observer sur la figure 2, la face du levier 12a en contact avec le verrou 15 forme un angle aigu de quelques degrés avec la tige 16 faciltant son dégagement. De ce fait, même si la traction exercée par le bateau sur le crochet 12 est très élevée, la force nécessaire pour dégager le verrou 15 est très faible. Le basculement du crochet 12 qui suit le dégagement du levier 12a permet la séparation automatique du bateau sans nécessiter aucune manoeuvre particulière et quelle que soit l'état de la mer et la force du vent. Ainsi l'amarrage s'effectue à l'aide d'un système à mousqueton classique tandis que le désamarrage résulte du pivotement du crochet lui-même et non pas de l'ouverture du clapet qui a elle seule ne permet pas de dégager le crochet si celui-ci est soumis à une importante force de traction. En plus, le basculement du crochet 12 est entièrement automatique une fois que le verrou 15 a été actionné à distance par l'intermédiaire de l'organe de préhension 22.

Après l'utilisation du dispositif, on fait pivoter manuellement le crochet 12 afin qu'il retrouve sa position initiale. Lors de cette manipulation, la rampe d'armement 12b du levier 12a déplace longitudinalement le verrou 15 de manière à réarmer automatiquement le dispositif pour une utilisation ultérieure.

Le dispositif selon l'invention est en outre simple, robuste, comporte peu de pièces et est totalement fiable. Le fait que le système à mousqueton soit solidaire d'un corps tubulaire allongé facilite l'accrochage et le décrochage à distance.

Dans la variante de la figure 5, la tige 16 du verrou 15 s'étend jusqu'à l'extrémité arrière du corps tubulaire 1 et est reliée à un manchon 24 monté coulissant sur le corps tubulaire 1 par une vis transversale 25 fixée dans un cylindre 26. La vis 25 traverse une ouverture allongée 27 du corps tubulaire 1. Le manchon 24 présente une ouverture 28 pour recevoir la tête de la vis 25. (Une goupille de sécurité mobile, non illustrée, relie le manchon 24 au corps tubulaire 1 et empèche l'actionnement accidentelle du verrou 15) . Ce mécanisme remplace le lien souple 20 commandé par la bague 22 des figures 1 à 4.

## Revendications

1. Dispositif d'accrochage à mousqueton, notamment pour l'amarrage de bateaux, comprenant un crochet fermé par un clapet maintenu appliqué contre l'extrémité intérieure du crochet par un ressort de rappel, caractérisé en ce que ledit crochet (12) est articulé à un élément de support (6,7) autour d'un axe (8) perpendiculaire au flanc du mousqueton, ce crochet étant solidaire d'un levier (12a) alors que ledit élément de support (6,7) porte un organe de verrouillage (15) susceptible d'occuper deux positions limites, l'une dans laquelle ledit crochet (12) est rendu solidaire dudit élément de support (6.7), l'autre dans laquelle ledit crochet (12) est susceptible de pivoter librement autour de son axe d'articulation (8).

2. Dispositif selon la revendication 1, caractérisé en ce que ledit élément de support (6,7) porte une butée (10) contre laquelle ledit levier (12a) est appliqué par ledit verrou (15).

3. Dispositif d'accrochage selon la revendication 1, caractérisé en ce que ledit élément de support (6,7) est solidaire de l'extrémité d'un corps tubulaire (1).

4. Dispositif d'accrochage selon la revendication 2, caractérisé en ce que ledit verrou (15) est monté longitudinalement coulissant et que la surface dudit levier (12a) contre laquelle le verrou (15) exerce une pression tendant à l'appliquer contre ladite butée, forme un angle aigu de quelques degrés avec la direction de coulissement dudit verrou (15).

5. Dispositif d'accrochage selon la revendication 2, caractérisé en ce que ledit verrou est manoeuvré par un lien souple (20) s'étendant à l'intérieur dudit corps tubulaire (1) et traversant la paroi de celui-ci au voisinage de son extrémité arrière, l'ouverture (21) à travers laquelle passe ce lien souple (20) présentant la forme d'un trou de serrure, une bague (23) étant fixée à ce lien souple au voisinage de son extrémité arrière, le diamètre de cette bague (23) lui permettant de passer à travers la partie la plus large de l'ouverture (21) mais pas à travers la partie étroite de cette même ouverture.

6. Dispositif d'accrochage selon la revendication 2, caractérisé en ce que ledit levier (12a) comporte un plan incliné (12b) qui entre en contact avec le verrou (15) lors de la fermeture manuelle du crochet (12) de sorte que ledit plan incliné exerce une pression dans la direction de coulissement dudit verrou, déplaçant ainsi le verrou à l'encontre du ressort (29) de telle manière que le levier du crochet prendre sa position initiale sis entre ledit verrou (15) et la butée.
